(19) Europäisches Patentamt

European Patent Office

Office européen des brevets

(11) Veröffentlichungsnummer: **0 499 970 B1**

# (12) EUROPÄISCHE PATENTSCHRIFT

(45) Veröffentlichungstag der Patentschrift: **17.05.95**

(51) Int. Cl.⁶: **B61H 15/00**

(21) Anmeldenummer: **92102430.3**

(22) Anmeldetag: **13.02.92**

(54) **Zangenartiges Bremsgestänge, insbesondere für Scheibenbremsen von Schienenfahrzeugen.**

(30) Priorität: **20.02.91 DE 4105286**

(43) Veröffentlichungstag der Anmeldung:
**26.08.92 Patentblatt 92/35**

(45) Bekanntmachung des Hinweises auf die
Patenterteilung:
**17.05.95 Patentblatt 95/20**

(84) Benannte Vertragsstaaten:
**DE FR GB IT SE**

(56) Entgegenhaltungen:
**EP-A- 0 121 815**
**EP-A- 0 188 710**
**CH-A- 104 234**
**CH-A- 108 630**
**DE-A- 2 346 828**

(73) Patentinhaber: **KNORR-BREMSE AG**
**Postfach 40 10 60**
**D-80710 München (DE)**

(72) Erfinder: **Bartlechner, Manfred**
**Am Katzenstein 1**
**W-8031 Wessling (DE)**
Erfinder: **Haberzeth, Thomas**
**Hansjakobstrasse 36**
**W-8000 München 80 (DE)**
Erfinder: **Staltmeir, Josef**
**Knorrstrasse 83**
**W-8000 München 40 (DE)**

## Beschreibung

Die Erfindung betrifft ein zangenartiges Bremsgestänge für Fahrzeuge, insbesondere für Scheibenbremsen von Schienenfahrzeugen, mit zwei Zangenhebeln, deren eine Enden mit Bremsbacken gekoppelt sind, deren andere Enden vermittels eines Bremskraftmotors auseinanderspreizbar sind und welche in ihrem mittleren Bereich durch eine Zangenzugstange mit integriertem, ein Schraubgetriebe beinhaltendem Hubnachsteller verbunden sind, wobei der Hubnachsteller vermittels eines Steuergestänges in Abhängigkeit vom Spreizhub an den bremskraftmotorseitigen Enden der Zangenhebel steuerbar ist.

Ein derartiges Bremsgestänge ist aus der DE-OS 23 46 828 bekannt. Die Zangenzugstange ist hierbei in wesentlichen als Gewindespindel eines Spannschlosses ausgebildet, die außenseitig des einen Zangenhebels mit einem grob verzahnten Ratschenrad gekoppelt ist, in welches unter Federkraft eine an einem drehbaren Gehäuse gelagerte Ratsche eingreift. Als Steuergestänge ist ein Bowdenzug vorgesehen, dessen Seele als erstes Steuergestängeteil an einer Verlängerung des vom Bremskraftmotor beweglichen Zangenhebels angelenkt ist; die Hülle des Bowdenzuges ist als zweites Steuergestängeteil am Widerlager abgestützt. Der Bowdenzug ist über eine ein Spiel aufweisende Anschlagvorrichtung mit dem Ratschengehäuse gekoppelt, derart, daß er nach Überwinden des Spieles ein Drehen des Ratschengehäuses bewirkt. Bei übermäßigen Bremshub soll das Ratschengetriebe einen Zahn weiterratschen und während des nachfolgenden Lösehubes durch Drehen der Gewindespindel eine Spielnachstellung bewirken. Zum manuellen Rückstellen ist die Gewindespindel nach manuellem Ausheben der Ratsche rückschraubbar. Dieses bekannte Bremsgestänge ist mit dem Mangel versehen, daß die Gewindespindel keine Sicherung gegen ungewollte Drehungen beim Bremshub aufweist, insbesondere bei zu großem Anlegehub mit noch leichtgängig drehbarer Gewindespindel kann daher die Ratsche das Ratschenrad ungewollt mitdrehen, statt dessen Zahn zu überratschen, so daß keine Spielnachstellung erfolgt.

Aus der EP-B-0 132 601 ist ein Bremsgestänge für Fahrzeugreibungsbremsen ähnlich der eingangs angegebenen Art bekannt, bei welcher die Zangenzugstange vollständig gleichachsig aufgebaut ist, wobei das drehbare Teil ihres Schraubgetriebes durch einen zu Bremsbeginn voreilend zum Bremskraftmotor betätigbaren Hilfskraftmotor antreibbar ist. Der Hilfskraftmotor greift dabei an einem Drehhebel an, welcher über eine als Reibungs- und Einwegkupplung dienende Friktionsfeder mit dem drehbaren Schraubgetriebeteil in Verschraubungsrichtung zum Verkürzen der Zangenzustange gekoppelt ist. Das drehbare Verschraubungsteil ist des weiteren über eine in dessen Drehrichtung zum Bremsenlüften sperrende, ebenfalls als Friktionsfeder ausgebildete Einwegkupplung und in Serie zu dieser über einen spielbehafteten Drehanschlag mit einem drehfest gehaltenen Teil gekoppelt. Bei diesem Bremsgestänge ist die voreilende Ansteuerung der Zangenzugstange aufwendig und der einachsige Aufbau der Zangenzugstange bedingt eine Anordnung einer der Friktionsfederkupplungen innerhalb einer zugleich als Anlenkstelle für einen Zangenhebel ausgebildeten Mutter des Schraubgetriebes, wodurch sie mit nur sehr kleinen Durchmesser und somit bau- und funktionsungünstig gestaltbar ist.

Es ist Aufgabe der Erfindung, ein Bremsgestänge der eingangs genannten Art bau- und funktionsgünstig derart auszugestalten, daß bei nur kurzer, erforderlicher Baulänge der Zangenzugstange die Nachstellerorgane einfach und robust ausbildbar und in einem für das Bremsgestänge einbaugünstigen Raum unterbringbar sind, wobei zugleich eine einfache Ansteuerung möglich sein soll.

Diese Aufgabe wird bei einem Bremsgestänge der eingangs genannten Art gemäß der Erfindung dadurch gelöst, daß an der Zangenzugstange ein vom Steuergestänge drehbarer Betätigungshebel vorgesehen ist, der mit einer rechtwinklig zur Achse der Zangenzugstange verlaufenden Nachstellereingangswelle verbunden ist, die über eine erste Einwegdrehkupplung mit einer zu ihr gleichachsigen Nachstellerausgangswelle gekoppelt ist, und daß die Nachstellerausgangswelle über eine zweite Einwegdrehkupplung gegen ein drehfestes Gehäuseteil abgestüzt und vermittels eines Kegelradgetriebes mit einen drehbaren Teil des zur Zangenzugstange gleichachsigen Schraubgetriebes gekoppelt ist.

Nach der weiteren Erfindung vorteilhafte Ausgestaltungsmöglichkeiten eines derartig ausgebildeten Bremsgestänges sind den Merkmalen der Unteransprüche entnehmbar.

In den Zeichnungen ist ein Ausführungsbeispiel für ein nach der Erfindung ausgebildetes Bremsgestänge beispielsweise dargestellt, und zwar zeigt

Fig.1       eine Aufsicht mit z.T. aufgeschnittenen Bauelementen auf das Bremsgestänge,

Fig.2       einen Schnitt durch die Zangenzugstange und den in diese integrierten Hubnachsteller in vergrößertem Maßstab und

Fig.3, 4 und 5       Schnittbilder gemäß den Linien A-B, C-D bzw. E-F in Fig.2 in nochmals vergrößertem Maßstab.

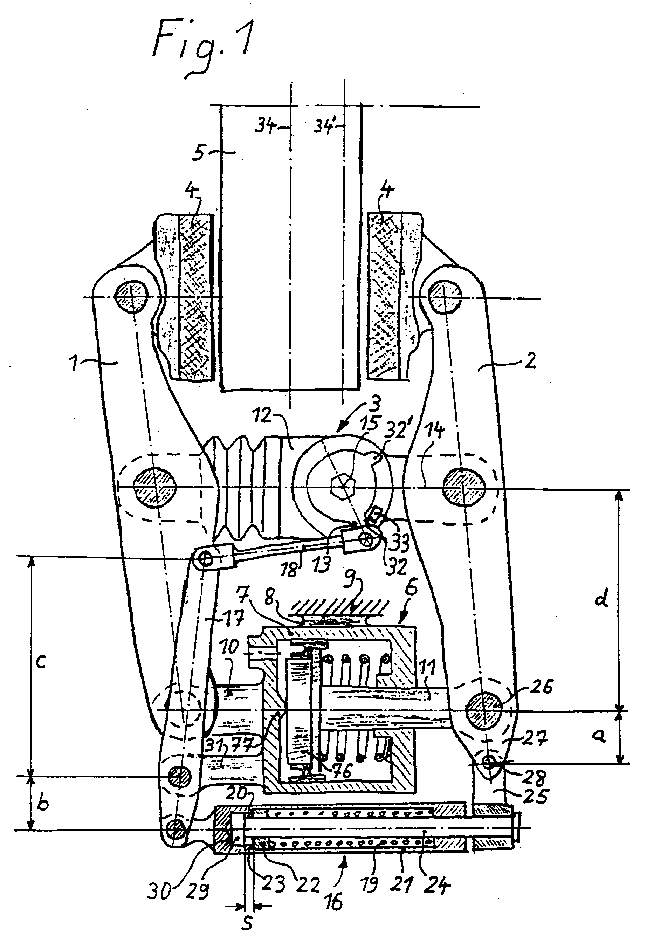

Gemäß der Darstellung nach Fig.1 ist das zangenartige Bremsgestänge in wesentlichen als übliche H-Bremszange mit zwei Zangenhebeln 1 und 2 ausgebildet, wobei die beiden Zangenhebel 1 und 2 in ihrem mittleren Bereich durch eine Zangenzugstange 3 gelenkig miteinander verbunden sind. An die einen Enden der Zangenhebel 1 und 2 sind Bremsbacken 4 angelenkt, zwischen welche eine abzubremsende Bremsscheibe 5 eingreift. Zwischen die anderen Enden der Zangenhebel 1 und 2 ist als Bremskraftmotor ein druckluftbeaufschlagbarer Bremszylinder 6 eingeordnet, dessen Zylindergehäuse 7 mittels einer elastischen Zwischenlage 8 an einen im weiteren nicht dargestellten, als Festpunkt dienenden Rahmenteil 9 gehaltert ist. Das Zylindergehäuse 7 trägt einerseits einen Lagerbock 10, an welchem das Ende des Zangenhebels 1 gelagert ist. Die als Kraftabgabeglied dienende Kolbenstange 11 des Bremszylinders 6 ist nahe des Endes des anderen Zangenhebels 2 angelenkt.

Die Zangenzugstange 3 ist mit einen integrierten Hubnachsteller 12 ausgestattet, dessen Aufbau später im einzelnen beschrieben wird; in Fig.1 ist ein Betätigungshebel 13 des Hubnachstellers 12 ersichtlich, welcher um eine zur Längsrichtung bzw. Achse 14 der Zangenzugstange 3 und zur Längsrichtung der Zangenhebel 1 und 2 im wesentlichen rechtwinklig verlaufende Achse 15 drehbar ist. Zur Betätigung des Hubnachstellers 12 ist der Betätigungshebel 13 mit einem Steuergestänge gekoppelt, welches eine Zugstange 16 als erstes Steuergestängeteil, einen zweiarmigen Übersetzungshebel 17 sowie einen Hebel 18 umfaßt. Die Zugstange 16 ist als ein gegen die Kraft einer vorgespannten Feder 19 verlängerbares Federglied mit einer integrierten Anschlagvorrichtung 20 ausgebildet, sie weist hierzu einen Zylinderkörper 21 auf, der die Feder 19 beinhaltet. Die Feder 19 ist einerseits gegen den Zylinderkörper 21 und andererseits gegen ein Anschlagteil 22 abgestützt, welches ringförmig ausgebildet ist und in Belastungsrichtung durch die Feder 19 gegen einen als Ringschulter im Zylinderkörper 21 ausgebildeten, ersten Anschlag 23 abgefangen ist. In den Zylinderkörper 21 greift verschieblich ein Zuganker 24 ein, der an seinem ins Freie ragenden Ende eine von der im wesentlichen parallel zur Kolbenstange 11 verlaufenden Zugstange 16 in Richtung zum Bremszylinder 6 auskragende Abwinklung 25 trägt, deren Ende an einer die Anlenkstelle 26 des Zangenhebels 2 an der Kolbenstange 11 überragenden Zangenhebelverlängerung 27 in einer Anlenkstelle 28 angelenkt ist; die Länge der Zangenhebelverlängerung 27 ist dabei zur Länge des ganzen Zangenhebels 2 sehr kurz bemessen. Innerhalb des Zylinderkörpers 21 durchragt der Zuganker 24 verschieblich die Feder 19 und das Anschlagteil 22 und endet mit einem Abstand s hinter diesem mit einen einen zweiten Anschlag 29 bildenden Teller, der in der dargestellten Lösestellung mit seiner dem Anschlagteil 22 abgewandten Seite an einem Ringflansch 30 des Zylindergehäuses 21 anliegt. Die den Abstand s als Spiel aufweisende Anschlagvorrichtung 20 wird somit aus dem Anschlagteil 22 und dem zweiten Anschlag 29 gebildet.

Das der Anlenkstelle 28 abgewandte Ende des Zylinderköpers 21 und damit der Zugstange 16 ist an einem Ende des Übersetzungshebels 17 angelenkt, der Übersetzungshebel 17 erstreckt sich im wesentlichen rechtwinklig zur Kolbenstange 11 und damit auch zur Zugstange 16 in Richtung zur Zangenzugstange 3, er überkreuzt dabei verbindungsfrei die Anlenkstelle des Zangenhebels 1 am Lagerbock 10. Nahe der Anlenkung an der Zugstange 16 ist der Übersetzungshebel 17 an einem Widerlager 31 angelenkt, welches fest am Zylindergehäuse 7 angeordnet ist. Der etwa parallel zur Zangenzugstange 3 verlaufende Hebel 18 koppelt das der Zangenzugstange 3 zugewandte Ende des Übersetzungshebels 17 mit den Betätigungshebel 13, welcher von der Achse 15 etwas in Entfernungsrichtung vom Übersetzungshebel 17 gedreht in Richtung zum Bremszylinder 6 auskragt. Diese Drehlage des Betätigungshebels 13 ist durch Anlage eines an ihm vorgesehenen Anschlages 32 an einem an der Zangenzugstange 3 festen Widerlager 33 bestimmt, der Betätigungshebel 13 ist unter Abheben des Anschlages 32 von Widerlager 33 in Uhrzeigersinn, in Drehrichtung zum Übersetzungshebel 17 hin, drehbar.

Zum Anschlag 32 entgegen dem Uhrzeigersinn um etwas über 90° versetzt befindet sich am Betätigungshebel 13 ein zweiter, dem Anschlag 32 gegenüberliegender Anschlag 32', derart, daß sich das Widerlager 33 zwischen diesen beiden Anschlägen 32,32' befindet. Bei Drehungen des Betätigungshebels 13 im Uhrzeigersinn gelangt der Anschlag 32' zur Anlage am Widerlager 33, bevor sich eine gestreckte Lage zwischen dem Betätigungshebel 13 und dem Hebel 18 ergibt: Es ist somit das Erreichen einer gestreckten Lage dieser beiden Hebel ausgeschlossen und stets ein Rückdrehen des Betätigungshebels 13 bei Druckbelastung durch den Hebel 18 gewährleistet.

In Fig.1 ist das Bremsgestänge bei seitlich nach links versetzter Lage der Bremsscheibe 5 mit deren Radialmittelebene 34 dargestellt; bei normaler, nicht zur Seite versetzter Lage der Bremsscheibe 5 würde sich deren Radialmittelebene in der durch die strichpunktierte Linie 34' bezeichneten Lage befinden und die Zangenhebel 1 und 2 nähmen eine um ihre Anlenkungen am Bremszylinder 6 im Uhrzeigersinn gedrehte Lage ein, derart, daß die sich etwa rechtwinklig zur Achse der Kolbenstange 11 erstrecken. Die Seitenverschieblichkeit der Bremsscheibe 5 kann beispielsweise durch ihre Anordnung an einen seitenverschieblichen Schienenfahrzeugradsatz gegeben sein. Das Steuergestänge ist derart ausgestaltet, daß es beim Seitenversatz der Bremsscheibe 5 keinerlei unerwünschte Steuerbewegungen auf den Betätigungshebel 13 ausübt, jedoch eine relativ große Wegübersetzung der kleinen, an der Kolbenstange 11 relativ zum Zylindergehäuse 7 auftretenden Bremshübe in große Betätigungshübe bzw. -drehungen für den Betätigungshebel 13 umsetzt. Hierzu ist das Brems und das Steuergestänge nach der Formel

$$a:d = b:c$$

bemessen, wobei diese Verhältnisse zweckmäßig etwa 1:4 betragen.

Dabei bedeuten

a den Abstand an Zangenhebel 2 zwischen dessen Anlenkungen am Bremskraftmotor 6, also der Anlenkstelle 26, und an der Zugstange 16, also der Anlenkstelle 28,

b den Abstand am Übersetzungshebel zwischen dessen Anlenkung an der Zugstange 16 und der Lagerung am Widerlager 31,

c den Abstand am Übersetzungshbel 17 zwischen dessen Lagerungen am Widerlager 31 und am Hebel 18 bzw. der Koppelung zum Betätigungshebel 13 und

d den Abstand am vorgenannten Zangenhebel 2 zwischen dessen Anlenkungen an der Kolbenstange 11 und an der Zangenzugstange 3.

Dabei ergibt sich in überraschender Weise, daß die Zangenhebelverlängerung 27 relativ kurz auszubilden ist, wenn bei vernünftiger Anordnung des Widerlagers 31 am Bremszylinder 6 der Übersetzungshebel 17 bei zweckmäßiger Gestaltung ein relativ großes Übersetzungsverhältnis von wie vorstehend erwähnt etwa 1:4 aufweisen soll. Infolge der kurzen Zangenhebelverlängerung 27 verläuft die Zugstange 16 nahe beim Bremszylinder 6, und somit einbauraumgünstig.

Das Bremsgestänge muß nicht für eine einzelne Scheibenbremse vorgesehen sein, wie es in Fig.1 dargestellt ist und vorstehend beschrieben wurde, es ist vielmehr auch möglich, dieses Bremsgestänge in ein anderes Bremsgestänge für Klotz- oder mehrere Scheibenbremsen zu integrieren. An die Zangenhebel 1,2 können dabei einerseits anstelle der Bremsbacken 4 weitere, zu Reibungsbremsen führende Bremsgestänge und/oder an die bremszylinderseitigen Enden dieser Zangenhebel 1 und/oder 2 Gestänge angelenkt sein, welche von einem andererorts angeordneten Bremskraftmotor bewegbar sind.

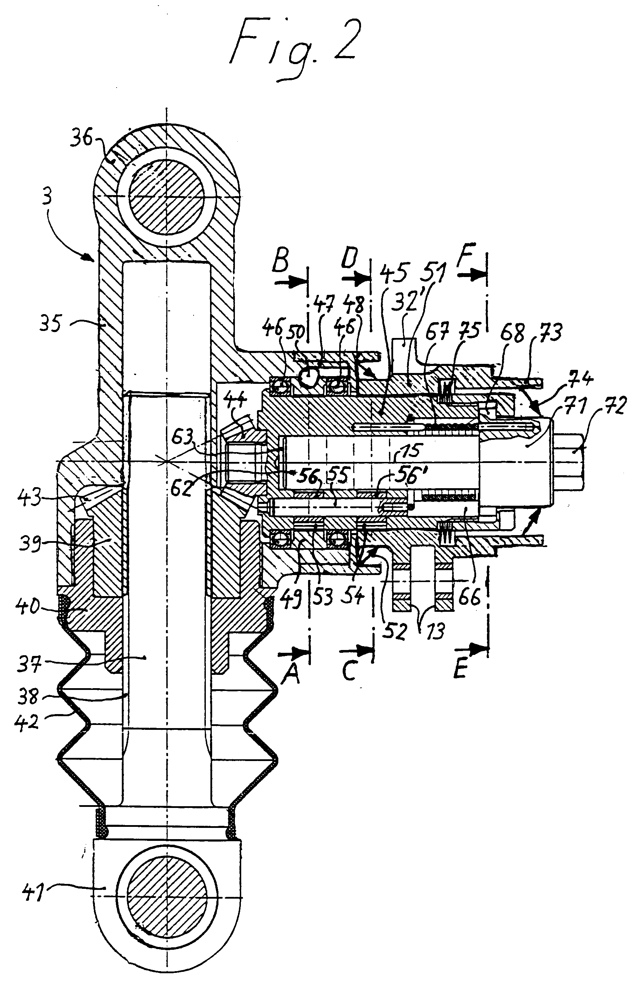

Die in Fig.1 vorgesehene Zangenzugstange 3 mit integriertem Hubnachsteller 12 ist zweckmäßig wie aus den Figuren 2 bis 5 ersichtlich aufgebaut. Gemäß Fig.2 weist die Zangenzugstange 3 ein im wesentlichen rohrartiges, einseitig geschlossenes Gehäuse 35 auf, an welchem am geschlossenen Ende ein Auge 36 zur Anlenkung an einem der Zangenhebel, beispielsweise dem Zangenhebel 2 gemäß Fig.1, angeformt ist. In das Gehäuse 35 greift eine Gewindespindel 37 ein, welche vermittels eines vorzugsweise selbsthemmend ausgebildeten Gewindes 38 mit einer im Gehäuse 35 drehbar gelagerten Mutter 39 verschraubt ist und so mit dieser ein Schraubgetriebe 37,39 bildet. Ein mit dem Gehäuse 35 fest verschraubter Deckel 40 hält gff. über ein nicht dargestelltes Axiallager die Mutter 39 in Gehäuse 35. Der Deckel 40 weist eine Öffnung zum beweglichen Durchtritt der Gewindespindel 37 auf, die Gewindespindel 37 ist an ihren dem Gehäuse 35 abgewandten Ende mit einem Auge 41 zur Anlenkung am anderen Zangenhebel, gemäß Fig.1 dem Zangenhebel 1, versehen. Vom Gehäuse 35 bzw. dem Deckel 40 erstreckt sich ein die Gewindespindel 37 umgebender Faltenbalg 42 bis zum Auge 41.

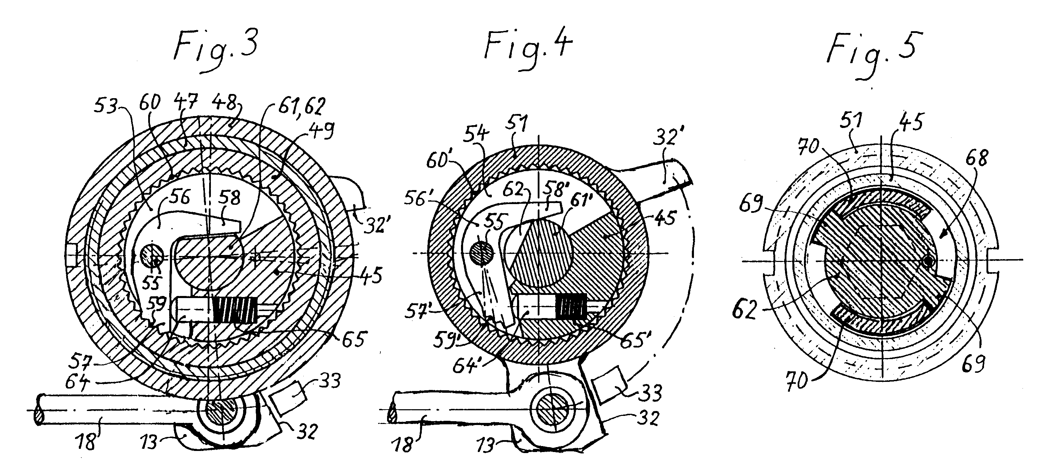

An ihrer den Deckel 40 abgewandten Stirnseite ist die Mutter 39 mit einer Kegelradverzahnung 43 versehen, welche mit einem ritzelartigen Kegelrad 44 kämmt. Das Kegelrad 44 ist drehfest mit einer Nachstellerausgangswelle 45 verbunden, welche gleichachsig zur Achse 15 vermittels zweier Wälzlager 46 drehbar in einen rechtwinklig auskragenden Rohransatz 47 des Gehäuses 35 gelagert ist. Zur Halterung der Wälzlager 46 ist auf den Rohransatz 47 ein Deckelteil 48 mit radialen Innenflansch aufgeschraubt, zwischen den beiden Wälzlagern 46 befindet sich ein Distanzring 49, welcher beispielsweise durch eine in Nuten eingreifende Kugel 50 drehfest im Rohransatz 47 gehalten ist. Anschließend an das Deckelteil 48 ist auf einen aus dem Rohransatz 47 ragenden Abschnitt der Nachstellerausgangswelle 45 eine im wesentlichen hülsenartige Nachstellereingangswelle 51 drehbar gelagert, von welcher radial der Betätigungshebel 13 und der Anschlag 32' auskragen. Ein Dichtring 52 dichtet den Ringspalt zwischen dem Deckelteil 48 und der Nachstellereingangswelle 51 ab. Im vom Distanzring 49 bzw. der Nachstellereingangswelle 51 übergriffenen Bereich ist die Nachstellerausgangswelle 45 mit jeweils einer etwa 2/3 ihres Querschnittes erfassenden Aussparung 53 bzw. 54 versehen, wie es aus den Figuren 3 und 4 ersichtlich ist. Die Aussparungen 53 und 54 werden von einen Bolzen 55 durchquert, welcher exzentrisch, aber parallel zur Achse 15 in der Nachstellerausgangswelle 45 gehaltert ist. Auf dem Bolzen 55 ist in der Aussparung 53 eine Klinke 56 mit zwei zueinander abgewinkelt verlaufenden Schenkeln 55 und 58 drehbar gelagert. Der eine Schenkel 57 endet mit einer außenseitigen Zahnung 59 vor der eine Zahnung 60 aufweisenden Innenwandung des Distanzringes 49, während der andere Schenkel 58 einen als Einfräsung ausgebildeten Nocken 61 einer Nok-

kenwelle 62 übergreift, die gleichachsig zur Achse 15 in einer zur dem Kegelrad 44 abgewandten Seite hin offenen, die Aussparungen 53 und 54 durchsetzenden Sackbohrung 63 der Nachstellerausgangswelle 45 drehbar gelagert ist. Der Schenkel 57 ist innenseitig von einem in der Nachstellerausgangswelle 45 verschieblich gelagerten Druckbolzen 64 in Eingriffsrichtung der Zahnungen 59 und 60 belastet, der Druckbolzen 64 ist seinerseits von einer Feder 65 in dieser Eingriffsrichtung belastet. Der Distanzring 49 mit seiner Zahnung 60 und die Klinke 56 bilden somit eine als Klinkenradgetriebe 56,60 ausgebildete Einwegdrehkupplung zwischen der Nachstellerausgangswelle 45 und dem gehäusefesten Rohransatz 47.

In der Aussparung 54 befindet sich ein zum vorstehend beschriebenen gleichartig ausgestaltetes Klinkenradgetriebe 56',60', dessen Teile mit den gleichen, lediglich durch einen Strich ergänzten Bezugszahlen gemäß vorstehender Beschreibung in Fig.4 dargestellt sind; eine nochmalige Beschreibung des Klinkenradgetriebes 56',60' erübrigt sich daher. In einziger Abänderung befindet sich die Zahnung 60' nicht am Distanzring 49, sondern am Innenumfang der Nachstellereingangswelle 51. In beiden Figuren Fig.3 und Fig.4 sind weitere Bezugszahlen angegeben, deren Bedeutung der vorangehenden Beschreibung entnehmbar ist. Die beiden Klinkenradgetriebe 56,60 und 56',60' sperren jeweils bei Linksdrehung der Nachstellerausgangswelle 45 relativ zum Rohransatz 47 bzw. relativ zur Nachstellereingangswelle 51, in umgekehrter Relativdrehrichtung sind sie selbstlösend; bei Rechtsdrehung der Nachstellereingangswelle 51 wird somit über das Klinkenradgetriebe 56',60' die Nachstellerausgangswelle 45 mitgenommen, während das Klinkenradgetriebe 56,60 bei dieser Drehung löst und lediglich ein Rückdrehen der Nachstellerausgangswelle 45 sperrt; bei dieser Drehung der Nachstellerausgangswelle 45 wird über das aus dem Kegelrad 44 und der Kegelradverzahnung 43 gebildete Kegelradgetriebe 43,44 die Mutter 39 derart gedreht, daß sie sich auf der Gewindespindel 37 in Annäherungsrichtung zum Auge 41 verschraubt, wodurch die Zangenzugstange 3 insgesamt verkürzt wird.

In Fig.3 ist der Nocken 61 in einer Drehlage dargestellt, in welcher er ein Einrasten der Klinke 56 und Sperren des Klinkenradgetriebes 56,60 ermöglicht; in Fig.4 ist der entsprechende Nocken 61' um ca. 60° nach links verdreht dargestellt, die Klinke 56' wird durch Anlage des Nockens 61' am Schenkel 58' dabei in Ausheberichtung der Zahnung 59' von der Zahnung 60' entgegen der Belastung durch die Feder 65' gedreht, das Klinkenradgetriebe 56',60' ist in dieser Stellung entsperrt.

Im Anschluß an das Klinkenradgetriebe 56',60' ist in einem Ringraum 66 zwischen der Nachstellerausgangswelle 45 und der Nockenwelle 62 eine diese beiden Wellen derart gegeneinander verspannende Drehfeder 67 angeordnet, daß die Nockenwelle 62 sich aus ihrer in Fig.4 dargestellten Drehlage nach rechts in die in Fig.3 gezeigte Drehlage zu drehen sucht. An den Ringraum 66 anschließend ist zwischen ebenfalls der Nachstellerausgangswelle 45 und der Nockenwelle 62 ein Drehanschlag 68 vorgesehen, welcher ein Drehspiel von ca. 60° aufweist: Zum Bilden des Drehanschlages 68 sind an der Nockenwelle 62, wie aus Fig.5 ersichtlich, zwei radial auskragende Fortsätze 69 vorgesehen, welche in die Axialschlitze zwischen zwei etwa viertelzylindrischen Hülsenabschnitten 70 eingreifen, welche ihrerseits einander gegenüberliegend fest mit der Nachstellerausgangswelle 45 verbunden sind. Im Normalfall hält die Drehfeder 67 dabei den Drehanschlag 68 in der rechten Drehendstellung der Nockenwelle 62 geschlossen, wie es aus Fig.5 ersichtlich ist. Bei Linksdrehung der Nockenwelle 62 wird nach deren Relativdrehung um ca. 60° der Drehanschlag 68 andersseitig geschlossen, so daß bei Weiterdrehung die Nachstellerausgangswelle 45 formschlüssig mitgenommen wird.

Die Nockenwelle 62 überragt mit einem verstärkten, außenzylindrischen Abschnitt 71 axial die Nachstellerausgangswelle 45 und endet mit einem Schlüsselflächen 72 tragenden Abschnitt, die Schlüsselfläche 72 dienen dem Ansetzen eines Drehwerkzeuges und sind im Ausführungsbeispiel als Sechskant ausgeführt. Zwischen einem die Nachstellerausgangswelle 45 überragenden, innenzylindrischen Abschnitt 73 der Nachstellereingangswelle 51 und dem zylindrischen Abschnitt 71 der Nockenwelle 62 ist ein Dichtungsring 74 angeordnet, welcher ebenso wie der Dichtring 52 und auch der Faltenbalg 42 ein Eindringen von Fremdkörpern und Verschmutzung in den Innenraum des Hubnachstellers 12 und des Gehäuses 3 ausschließen soll.

In fluchtenden Ringräumen zwischen der Nachstellerausgangswelle 45 und der Nachstellereingangswelle 51 ist ein als Ringfeder 75 ausgebildetes Reibelement eingespannt, welches die Nachstellereingangswelle 51 axial in Andrückrichtung an das Deckelteil 48 des Rohransatzes 47 belastet und so Relativdrehungen zwischen beiden Wellen 1 und zwischen der Nachstrellereingangswelle 51 und dem Rohransatz 47 reibbehaftet.

In der Lösestellung nimmt das Bremsgestänge im wesentlichen die aus Fig.1 ersichtliche Lage ein, lediglich die Bremsscheibe 5 befindet sich dabei normalerweise zentrisch zur Linie 34', bei Seitenverschiebungen des Radsatzes kann die Bremsscheibe 5 auch in die aus Fig.1 ersichtliche Lage mit der Radialmittelebene 34 oder einer spiegelbildlich hierzu andererseits der Linie 34' liegenden, nicht dargestellten Radialmittelebene gelangen. Bei diesen Seitenverschiebungen der Bremsscheibe 5 bleibt das Lüftspiel zwischen den Bremsbacken 4 und der Bremsscheibe 5 im wesentlichen konstant erhalten, auch über die Zugstange 16, den Übersetzungshebel 17 und den Hebel 18 wird bei diesen Seitenverschiebungen der Bremsscheibe 5 keinerlei Betätigungsbewegung auf den Betätigungshebel 13 übertragen, der Hubnachsteller 12 verbleibt also in Ruhe. Der Kolben 76 des Bremszylinders 6 liegt am Bremszylinderboden 77 an, der zweite Anschlag 29 ist am Ringflansch 30 abgefangen und weist zum Anschlagteil 22 den Abstand s auf, welcher proportional dem Sollüftspiel der Bremsbacken 4 zur Bremsscheibe 5 ist. Zugleich liegt der Anschlag 32 am Widerlager 33 an, zum Einjustieren dieser anliegenden Anschläge im Bremszylinder, in der Zugstange 16 und am Hubnachsteller 12 kann der Hebel 18 beispielsweise durch eine nicht dargestellte Verschraubung längenjustierbar ausgebildet sein. Die Nockenwelle 62 nimmt unter der Kraft der Drehfeder 67 bezüglich der Nachstellerausgangswelle 45 die aus Fig.5 ersichtliche Lage und bezüglich der Klinkenradgetriebe 56,60 und 56',60' die aus Fig.3 ersichtliche Lage ein, beide Klinkenradgetriebe sind unter der Kraft der Federn 65 bzw. 65' eingerastet.

Beim Auftreten von Fahrstößen schließen die anliegenden Anschläge 32,33 sowie 29,30 ein Schwingen des Betätigungsgestänges 16,17,18 aus, wodurch durch solche Schwingungen evtl. bewirkbare, unerwünschte Stellbewegungen am Hubnachsteller 12 ausgeschlossen werden.

Zum Bremsen wird der Kolben 76 des Bremszylinders 6 durch Druckmittelbeaufschlagung nach rechts verschoben, wodurch der Zangenhebel 2 um seine Anlenkung an der Zangenzugstange 3 entgegen dem Uhrzeigersinn verdreht wird, bis seine Bremsbacke 4 an der Bremscheibe 4 anliegt. Beim weiteren Ausfahren der Kolbenstange 11 dreht sich der Zangenhebel 2 um seine Anlenkung an der Bremsbacke 4, die Zangenzugstange 3 wird dabei gemäß Fig.1 geringfügig nach rechts parallelversetzt und dreht den Zangenhebel 1 um dessen Anlenkung am Lagerbock 10 im Uhrzeigersinn, bis dessen Bremsbacke 4 ebenfalls an der Bremsscheibe 5 anliegt. Während dieses Bremsenanlegens wird über die Anlenkstelle 28 und die Abwinklung 25 der Zuganker 24 mit dem zweiten Anschlag 29 nach rechts bewegt. Bei korrektem, vorangehendem Lösespiel zwischen den Bremsbacken 4 und der Bremsscheibe 5 gelangt der zweite Anschlag 29 gerade dann zur Anlage am Anschlagteil 22, wenn beide Bremsbacken 4 zur Anlage an die Bremsscheibe 5 gelangen. Der Zylinderkörper 21 mit dem Übersetzungshebel 17 sind bis dahin nahzu in Ruhe verblieben, die vorstehend zum Anlegen der linken Bremsbacke 4 an die Bremsscheibe 5 erwähnte Parallelverschiebung der Zangenzugstange 3 ist derart geringfügig, - sie beträgt lediglich etwa den halben Betrag des im Einmillimeterbereich liegenden Lüftspiels der linken Bremsbacke 4 - daß keinerlei Betätigung des Hubnachstellers 12 erfolgt.

Beim nachfolgenden Festbremshub mit kräftigem Anpressen der Bremsbacken 4 an die Bremsscheibe 5 erfolgt ein rascher Kräfteaufbau im Bremsgestänge, welches sich hierbei unter weiterem Ausfahren der Kolbenstange 11 elastisch verformt. Der rasche Kräfteaufbau führt zu entsprechenden Zugbeanspruchungen der Zangenzugstange 3, das in dieser enthaltene Schraubgetriebe 37,39 wird unter dieser Zugsbeanspruchung in Verschraubungsrichtung zum Verkürzen der Zangenzugstange 3 rasch so schwergängig, daß es durch die durch das Steuergestänge 16,17,18 übertragbaren, durch die Feder 19 begrenzten Kräfte nicht mehr bewegbar ist; in Schraubrichtung zum Verlängern der Zangenzugstange 3, d.h. Drehrichtung der Nachstellerausgangswelle 45 gemäß Fig.3 nach links, ist diese Nachstellerausgangswelle 45 durch das eingerastete Klinkenradgetriebe 56,50 gegen den Rohransatz 47 gesperrt. Beim weiteren Ausfahren der Kolbenstange 11 wird durch die Schwergängigkeit des Schraubgetriebes 37,39 über das Kegelradgetriebe 43,44, die Nachstellerausgangswelle 45 und das eingerastete Klinkenradgetriebe 56',60' die Nachstellereingangswelle 51 in Drehrichtung gemäß Fig.4 nach rechts gesperrt, so daß über den Betätigungshebel 13, den Hebel 18 und den Übersetzungshebel 17 der Zylinderkörper 21 festgehalten wird, während sich der Zuganker 24 mit dem zweiten Anschlag 29 weiter nach rechts bewegt und dabei das Anschlagteil 22 unter Abheben vom ersten Anschlag 23 und unter Spannen der Feder 19 mitnimmt.

Beim nachfolgenden Lösen ohne zwischenzeitlichem Verschleiß an den Bremsbacken 4 ergeben sich entsprechend umgekehrt verlaufende Vorgänge, wobei durch Anlage des Betätigungshebels 13 am Widerlager 33 der Zylinderkörper 21 festgehalten verbleibt, bis in der vollen Lösestellung der in Fig.1 dargestellte Ausgangszustand mit dem Abstand s wieder erreicht ist.

Während des Anlegehubes hält die Reibung der Tellerfedern 15 die Nachstellereingangswelle 51 in Anlage und damit Reibschluß über das Deckelteil 48 zum Rohransatz 47, so daß die Nachstellereingangswelle 51 ausreichend schwergängig ist, um beim Bewegen des zweiten Anschlages 29 von der Anlage am Ringflansch 30 zur Anlage am Anschlagteil 22 über den Hebel 18 und den Übersetzungshebel 17 den Zylinderkörper 21 festzuhalten. Hierdurch ist sichergestellt, daß während dieses Anlegehubes keine unerwünschten Bewegungen am Steuergestänge und am Hubnachsteller 12 erfolgen.

Falls zu Bremsbeginn die Bremsbacken 4 einen zu großen Lüfthub zur Bremsscheibe 5 aufweisen, liegen beim Anschlagen des zweiten Anschlages 29 am Anschlagteil 22 während des Einbremsvorganges die Bremsbacken 4 noch nicht an der Bremsscheibe 5 an. Beim weiteren Ausfahren der Kolbenstange 11 erfolgt daher noch kein Kraftaufbau im Bremsgestänge, insbesondere der Zangenzugstange 3, und das Schraubgetriebe 37,39 verbleibt auch in Verkürzrichtung der Zangenzugstange 3 leicht verschraubbar. Bei diesem weiteren Ausfahren der Kolbenstange 11 erfährt der Zuganker 24 mitsamt dem zweiten Anschlag 29 eine gemäß Fig.1 rechtsgerichtete Bewegung, über das Anschlagteil 22 und die vorgespannte Feder 19 wird dabei der Zylinderkörper 21 mitgenommen, wobei der Übersetzungshebel 17 um seine Lagerung am Widerlager 31 entgegen dem Uhrzeigersinn gedreht wird. Bezogen auf den Verschiebeweg der Zugstange 16 um das Übersetzungsverhältnis c:b hübübersetzt wird durch die Drehung des Übersetzungshebels 17 sowie den Hebel 18 der Betätigungshebel 13 gemäß Fig.1 im Uhrzeigersinn unter Abheben vom Widerlager 33 gedreht. Die Drehung des Betätigungshebels 13 und damit auch der mit diesem verbundenen Nachstellereingangswelle 51 wird über das in dieser Drehrichtung sperrende Klinkenradgetriebe 56',60' - s. Fig.4 mit jedoch in Drehlage nach Fig.3 befindlichem Nocken 61' - auf die Nachstellerausgangswelle 45 übertragen, welche somit mitgedreht wird; das Klinkenradgetriebe 56,60 gemäß Fig.3 ratscht bei dieser Rechtsdrehung der Nachstellerausgangswelle 45 durch. Unter der Kraft der Drehfeder 67 folgt die Nockenwelle 62 diesen Drehbewegungen nach, so daß die in Fig.3 gezeigte Lage des Nockens 61 bezüglich der Klinke 56 und die dieser gleichende Lage des Nockens 61' bezüglich der Klinke 56' erhalten bleiben. Der durch die Ringfeder 75 bedingte Reibschluß der Nachstellereingangswelle 51 zum Rohransatz 47 wird bei diesen Drehbewegungen überwunden, er ist schwächer als die durch die Vorspannung der Feder 19 übertragbare Drehkraft. Die Drehbewegung der Nachstellerausgangswelle 45 wird über das Kegelradgetriebe 43,44 in eine derartige Drehbewegung der Mutter 39 übertragen, daß diese sich auf der Gewindespindel 37 gemäß Fig.2 in Richtung zum Auge 41 verschraubt, wodurch die Länge der Zangenzugstange 3 verkürzt wird und die bremsbackenseitigen Enden der Zangenhebel 1 und 2 zum Verkleinern des übermäßigen Anlegehubes einander angenähert werden.

Die Drehung des Betätigungshebels 13 erfolgt, bis entweder die Bremsbacken 4 an der Bremsscheibe 5 zur Anlage gelangen, hierdurch ein rascher Kraftaufbau im Bremsgestänge und in der Zugstange 3 mit Sperren des Schraubgetriebes 37,39 durch Schwergängigkeit, wie vorstehend bereits beschrieben, erfolgt, oder bis der Anschlag 32' zur Anlage am Widerlager 33 gelangt. In beiden vorgeschilderten Fällen reicht die Vorspannkraft der Feder 19 nicht zum Weiterdrehen des Betätigungshebels 13 aus, die Feder 19 wird daher bei stehenbleibendem Zylinderkörper 21 während des nachfolgenden Festbremshubes, wie vorstehend bereits geschildert, komprimiert.

Falls während des nachfolgenden Lösevorganges der Bremsen der Festbremshub beendet wird, d.h. die Bremsbacken 4 nur noch nahezu kraftfrei an der Bremsscheibe 5 anliegen, bevor bei der rückwärts- bzw. gemäß Fig.1 linksgerichteten Relativbewegung des Zugankers 24 relativ zum Zylinderkörper 21 der Anschlagteil 22 zur Anlage am ersten Anschlag 23 gelangt, was beispielsweise infolge unzureichender Spielnachstellung während des Einbremsvorganges oder durch Bremsbackenverschleiß während der vorangehenden Bremsung verursacht sein kann, so vermag bei noch im Abstand vor dem Widerlager 33 befindlichem Anschlag 32' und durch den Kraftabbau wieder verstellbarem Schraubgetriebe 37,39 die Feder 19 den Zylinderkörper 21 nach rechts zu verschieben, wobei der Übersetzungshebel 17 und über den Hebel 18 damit auch der Betätigungshebel 13 entsprechende Drehungen erfahren. Diese Drehungen werden, wie bereits vorstehend zum Einbremsvorgang mit übermäßigem Anlegehub beschrieben, durch das sperrende Klinkenradgetriebe 56'60' auf die Nachstellerausgangswelle 45 und von dieser über das Kegelradgetriebe 43,44 in eine Betätigung des Schraubgetriebes 37,39 in Verkürzrichtung der Zangenzugstange 3 und damit einer Lösehubverkleinerung für die Bremsbacken 4 übertragen. Dieser Nachstellvorgang hält an, bis der ersten Anschlag 23 an dem Anschlagteil 22 zur Anlage gelangt. Beim während des nachfolgenden Lösevorganges erfolgenden Einfahren der Kolbenstange 11 in den Bremszylinder 6 bis zum Anlegen dessen Kolbens 76 an den Bremszylinderboden 77 wird anfänglich die Zugstange 16 insgesamt unter Linksdrehen des Betätigungshebels 13 nach links versetzt und sodann in der Zugstange 16 der zweite Anschlag 29 bis zur Anlage am Ringflansch 30 verschoben und der Betätigungshebel 13 weiter bis zur Anlage des Anschlages 32 am Widerlager 33 zurückgedreht; die Reihenfolge dieser Bewegungen an der Zugstange 16 kann auch vertauscht erfolgen, sie hängt von den jeweiligen Reibungsverhältnissen ab und ist unwesentlich. Beim Zurückdrehen des Betätigungshebels 13 bis zur Anlage am Widerlager 33 ratscht das Klinkenradgetriebe 56',60' durch, während das Klinkenradgetriebe 56,60 die Nachstellerausgangswelle 45 gegen den Rohransatz 47 sperrt und hierdurch an einem Mitdrehen hindert. Das Kegelradgetriebe 43,44 und damit das Schraubgetriebe 37,39 verbleiben also in Ruhe und es erfolgt kein weiterer Nachstellvorgang, die Bremsbacken 4 werden währenddessen um ihren Sollhub von der Bremsscheibe 5 abgehoben.

Zum Austausch verschlissener gegen unverschlissene Bremsbacken 4 ist die Zangenzugstange 3 durch Rückstellen des Hubnachstellers 12 zu verlängern. Zum Rückstellen des Hubnachstellers 12 wird vermittels eines an die Schlüsselfläche 72 angesetzten Drehwerkzeuges, zumeist eines Schraubenschlüssels, die Nockenwelle 62 gemäß den Figuren 3 bis 5 nach links gedreht. Unter Überwinden der Kraft der Drehfeder 67 wird dabei im Rahmen des Spieles des Drehanschlages 68 die Nockenwelle 62 zur stehenbleibenden Nachstellerausgangswelle 45 relativ verdreht, beide anfänglich dieser Relativdrehung eingerasteten Klinkenradgetriebe 56,60 und 56',60' sperren eine Drehmitnahme der Nachstellerausgangswelle 45 durch deren Drehabstützung zum Rohransatz 47 bzw. zur Nachstellereingangswelle 51, welche durch den geschlossenen Anschlag 32,33 an einer entsprechenden Drehung gehindert ist. Während der Relativdrehung der Nockenwelle 62 zur Nachstellerausgangswelle 45 drehen sich die Nocken 61 und 61' aus ihrer aus Fig.3 ersichtlichen Drehlage relativ zu den Klinken 56,56' in die aus Fig.4 ersichtliche Drehlage, wobei die Klinken 56,56' entgegen ihren Belastungen durch die Federn 65,65' um die Bolzen 55 gedreht werden und die Klinkenradgetriebe 56,60 und 56',60' somit ausgerastet werden, wie es in Fig.4 dargestellt ist. Beim weiteren Drehen der Nockenwelle 62 wird über den nunmehr linksseitig geschlossenen Drehanschlag 68 und bei ausgerasteten Klinkenradgetrieben 56,60 sowie 56',60' die Nachstellerausgangswelle 45 mitgedreht, wodurch über das Kegelradgetriebe 43,44 die Mutter 39 auf der Gewindespindel 37 in Entfernungsrichtung vom Auge 41 verschraubt wird und damit die Länge der Zangenzugstange 3 vergrößert wird. Durch dieses Verlängern der Zangenzugstange 3 werden die Bremsbacken 4 derart von der Bremsscheibe 5 entfernt, daß der Bremsbackenaustausch möglich ist. Beim nächstfolgenden Bremsvorgang erfolgt ein Wiederjustieren des Anlegehubes. Beim nach dem Verlängern der Zangenzugstange 3 erfolgenden Freigeben der Nockenwelle 62 wird diese durch die Drehfeder 67 unter Freigabe der Klinkenradgetriebe 56,60 und 56',60' wieder in die aus Fig.5 ersichtliche Relativdrehlage zur Nachstellerausgangswelle 45 zurückgedreht.

In Abänderung vom vorstehend beschriebenen Ausführungsbeispiel kann der das Sollüftspiel bestimmende Abstand s an anderer Stelle im Steuergestänge 16,17,18 beispielsweise in Form einer Langloch-Anlenkung bzw. Lagerung oder auch als spielbehafteter Drehanschlag zwischen den relativverdrehbar ausgebildeten Armen des Übersetzungshebels 17 oder zwischen dem Betätigungshebel 13 und der Nachstellereingangswelle 51 angeordnet werden. Ebenso sind Abwandlungen zur Feder 19 möglich, entsprechend der Verlagerung des Abstandes s kann auch die Feder 19 an andere Stellen des Steuergestänges verlagert und gff. in eine Drehfeder umgewandelt werden. Bei entsprechender Ausbildung des Übersetzungshebels 17 kann dieser unter Entfall des Hebels 18 beispielsweise vermittels einer Kulissenführung unmittelbar mit dem Betätigungshebel 13 gekoppelt werden, der Hubnachsteller 12 ist insgesamt um die Achse 14 beispielsweise um 90° gedreht anordenbar, derart, daß die Achse 15 in der Zeichenebene der Fig.1 verläuft. An Stelle der Klinkenradgetriebe 56,60 und/oder 56'60' können andersartige Einweg-Drehkupplungen vorgesehen werden, welche jedoch durch Relativdrehung der Nockenwelle 62 ausrastbar sein müssen. Des weiteren ist es möglich, nicht die Mutter 39 als drehbares Teil des Schraubgetriebes 37,39 auszubilden, sondern sie undrehbar zu haltern und statt dessen die Gewindespindel 37 drehbar auszubilden und mit der Nachstellerausgangswelle 45 zu koppeln. In jeder Ausführungsform kann das Schraubgetriebe auch spannschloßartig, mit zwei gegenläufigen Verschraubungsabschnitten entsprechend der eingangs erwähnten DE-OS 23 46 828 ausgebildet werden.

**Bezugszeichenliste**

| | |
|---|---|
| 1 | Zangenhebel |
| 2 | Zangenhebel |
| 3 | Zangenzugstange |
| 4 | Bremsbacke |
| 5 | Bremsscheibe |
| 6 | Bremszylinder |
| 7 | Zylindergehäuse |
| 8 | Zwischenlage |
| 9 | Rahmenteil |
| 10 | Lagerbock |
| 11 | Kolbenstange |
| 12 | Hubnachsteller |
| 13 | Betätigungshebel |
| 14 | Achse |
| 15 | Achse |
| 16 | Zugstange |
| 17 | Übersetzungshebel |
| 18 | Hebel |
| 19 | Feder |
| 20 | Anschlagvorrichtung |
| 21 | Zylinderkörper |
| 22 | Anschlagteil |
| 23 | erster Anschlag |
| 24 | Zuganker |

| | |
|---|---|
| 25 | Abwinklung |
| 26 | Anlenkstelle |
| 27 | Zangenhebelverlängerung |
| 28 | Anlenkstelle |
| 29 | zweiter Anschlag |
| 30 | Ringflansch |
| 31 | Widerlager |
| 32 | Anschlag |
| 32' | Anschlag |
| 33 | Widerlager |
| 34 | Radialmittelebene |
| 34' | Linie |
| 35 | Gehäuse |
| 36 | Auge |
| 37 | Gewindespindel |
| 38 | Gewinde |
| 39 | Mutter |
| 37,39 | Schraubgetriebe |
| 40 | Deckel |
| 41 | Auge |
| 42 | Faltenbalg |
| 43 | Kegelverzahnung |
| 44 | Kegelrad |
| 43,44 | Kegelradgetriebe |
| 45 | Nachstellerausgangswelle |
| 46 | Wälzlager |
| 47 | Rohransatz |
| 48 | Deckelteil |
| 49 | Distanzring |
| 50 | Kugel |
| 51 | Nachstellereingangswelle |
| 52 | Dichtring |
| 53 | Aussparung |
| 54 | Aussparung |
| 55 | Bolzen |
| 56,56' | Klinke |
| 57,57' | Schenkel |
| 58,57' | Schenkel |
| 59,59' | Zahnung |
| 60,60' | Zahnung |
| 56,60 | Klinkenradgetriebe |
| 56',60' | Klinkenradgetriebe |
| 61,61' | Nocken |
| 62 | Nockenwelle |
| 63 | Sackbohrung |
| 64,64' | Druckbolzen |
| 65,65' | Feder |
| 66 | Ringraum |
| 67 | Drehfeder |
| 68 | Drehanschlag |
| 69 | Fortsatz |
| 70 | Hülsenabschnitt |
| 71 | Abschnitt |
| 72 | Schlüsselfläche |
| 73 | Abschnitt |
| 74 | Dichtungsring |
| 75 | Ringfeder |
| 76 | Kolben |

| | |
|---|---|
| 77 | Bremszylinderboden |
| a | Abstand |
| b | Abstand |
| c | Abstand |
| d | Abstand |
| s | Abstand |

**Patentansprüche**

1. Zangenartiges Bremsgestänge, insbesondere für Scheibenbremsen von Schienenfahrzeugen, mit zwei Zangenhebeln (1;2), deren eine Enden mit Bremsbacken (4) gekoppelt sind, deren andere Enden vermittels eines Bremskraftmotors (6) auseinanderspreizbar sind und welche in ihrem mittleren Bereich durch eine Zangenzugstange (3) mit integriertem, ein Schraubgetriebe (37,39) beinhaltendem Hubnachsteller (12) verbunden sind, wobei der Hubnachsteller (12) vermittels eines Steuergestänges (16,17,18) in Abhängigkeit vom Spreizhub an den bremskraftmotorseitigen Enden der Zangenhebel (1;2) steuerbar ist, dadurch gekennzeichnet, daß an der Zangenzugstange (3) ein vom Steuergestänge (16,17,18) drehbarer Betätigungshebel (13) vorgesehen ist, der mit einer rechtwinklig zur Achse (14) der Zangenzugstange (3) verlaufenden Nachstellereingangswelle (51) verbunden ist, die über eine erste Einwegdrehkupplung (56',60') mit einer Nachstellerausgangswelle (45) gekuppelt ist, und daß die Nachstellerausgangswelle (45) über eine zweite Einwegdrehkupplung (56,60) gegen ein drehfestes Gehäuseteil (47) abgestützt und vermittels eines Kegelradgetriebes (43,44) mit einem drehbaren Teil (39) des zur Zangenzugstange (3) gleichachsigen Schraubgetriebes (37,39) gekoppelt ist.

2. Bremsgestänge nach Anspruch 1, dadurch gekennzeichnet, daß das Schraubgetriebe (37,39) selbsthemmend ausgebildet ist.

3. Bremsgestänge nach Anspruch 1 oder 2, dadurch gekennzeichnet, daß die Einwegdrehkupplungen als gemeinsam willkürlich entsperrbare Klinkenradgetriebe (56,60;56',60') ausgebildet sind und daß die Nachstellerausgangswelle (45) bei entsperrten Einwegdrehkupplungen (56,60;56',60') willkürlich drehbar ist.

4. Bremsgestänge nach einem oder mehreren der vorstehenden Ansprüche, dadurch gekennzeichnet, daß die Nachstellereingangswelle (51) hülsenartig ausgebildet und drehbar auf der ihrerseits drehbar im Gehäuseteil (47) gelagerten Nachstellerausgangswelle (45) gelagert ist.

5.  Bremsgestänge nach den Ansprüchen 3 und 4, dadurch gekennzeichnet, daß in der Nachstellerausgangswelle (45) gleichachsig zu dieser eine willkürlich drehbare Nockenwelle (62) drehbar gelagert ist, welche über einen spielbehafteten Drehanschlag (68) mit der Nachstellerausgangswelle (45) koppelbar ist und deren Nocken (61;61') in einer dem Spiel des Drehanschlages (68) entsprechenden Drehbewegung relativ zur Nachstellerausgangswelle (45) die Klinken (56;56') der Klinkenradgesperre (56,60;56',60') von deren von Federn (65,65') belasteten Einrast- zur Aushebestellung bzw. umgekehrt zu bewegen vermögen.

6.  Bremsgestänge nach Anspruch 5, gekennzeichnet durch eine die Nockenwelle (62) in Drehrichtung zur in Nachstelldrehrichtung liegenden Einraststellung der Klinken (56;56') belastende Drehfeder (67).

7.  Bremsgestänge nach Anspruch 6, dadurch gekennzeichnet, daß die Nockenwelle (62) in einer Sackbohrung (63) der Nachstellerausgangswelle (45) gelagert ist, daß die Drehfeder (67) zwischen der Nockenwelle (62) und der Nachstellerausgangswelle (45) eingespannt ist, daß die Nockenwelle (62) einen aus der Nachstellerausgangswelle (45) herausragenden, zylindrischen Abschnitt (71) und einem an diesen anschließenden, Schlüsselflächen (72) zum Ansetzen eines Drehwerkzeuges tragenden Endabschnitt aufweist, daß zwischen einem die Nachstellerausgangswelle (45) überragenden, innenzylindrischen Abschnitt (73) der Nachstellereingangswelle (51) und dem zylindrischen Abschnitt (71) der Nockenwelle (62) ein Dichtungsring (74) angeordnet ist, und daß zwischen die Nachstellereingangs- und -ausgangswelle (59 und 45) ein gff. als Ringfeder (75) ausgebildetes, einen Reibschluß der Nachstellereingangswelle (51) zum drehfesten Gehäuseteil (47) bewirkendes Reibelement eingespannt ist.

8.  Bremsgestänge nach einem der Ansprüche 5, 6 oder 7, dadurch gekennzeichnet, daß die Klinkenradgetriebe (56,60;56',60') ein innenverzahntes, am drehfesten Gehäuseteil (47) bzw. an der Nachstellereingangswelle (51) befindliches Klinkenrad (Zahnung 60;60') mit jeweils innenliegender, an einem exzentrischen Bolzen (55) der Nachstellerausgangswelle (45) drehbar gelagerter Klinke (56;56') aufweisen, wobei die Klinke (56;56') zwei zueinander abgewinkelt verlaufende Schenkel (57,58 bzw. 57',58') aufweist, deren einer Schenkel (57;57') außenseitig eine mit dem Klinkenrad zusammenwirkende Zahnung (59;59') trägt und deren anderer Schenkel (58;58') einen Nocken (61;61') der Nockenwelle (62) übergreift.

9.  Bremsgestänge nach Anspruch 8, dadurch gekennzeichnet, daß der die Zahnung (59;59') tragende Schenkel (57;57') in Einrastrichtung von einem in der Nachstellerausgangswelle (45) verschieblichen, von der Feder (65;65') belasteten Druckbolzen (64;64') belastet ist.

10. Bremsgestänge nach einem oder mehreren der vorstehenen Ansprüche, dadurch gekennzeichnet, daß die Nachstellereingangswelle (51) einen nur in Lösestellung des Bremsgestänges geschlossenen Drehanschlag (32,33) zum drehfesten Gehäuseteil (47) aufweist.

11. Bremsgestänge nach Anspruch 10, dadurch gekennzeichnet, daß das Steuergestänge (16,17,18) einen annähernd parallel zur Zangenzugstange (3) verlaufenden Hebel (18) aufweist, der einerseits am Betätigungshebel (13) und andererseits am Ende des längeren Hebelarms eines zweiarmigen, einem am Bremskraftmotor (6) vorgesehenen Widerlager (10) gelagerten Übersetzungshebels (17) angelenkt ist, daß das andere Ende des etwa senkrecht zur Kraftabgaberichtung des Bremskraftmotors (6) verlaufenden Übersetzungshebels (17) an einer etwa parallel zur Kraftabgaberichtung verlaufenden Zugstange (16) angelenkt ist, die andererseits an einer Verlängerung (27) des vom Bremskraftmotor (6) beweglichen Zangenhebels (2) angelenkt ist und welche vermittels einer integrierten Anschlagvorrichtung (20) um ein einem Sollüfthub proportionales Spiel (s) und hieran anschließend entgegen der Kraft einer vorgespannten Feder (19) verlängerbar ist.

## Claims

1.  Caliper-like brake linkage, particularly for disc brakes of rail vehicles, with two caliper levers (1; 2), the one ends of which are coupled to brake shoes (4), the other ends of which can be spread apart by means of a brake power motor (6) and which in their central area are connected by means of a caliper pull bar (3) with integrated stroke adjuster containing a spiral gear (37, 39), the stroke adjuster (12) being controllable by means of a control linkage (16, 17, 18) according to the spreading stroke at the ends of the caliper levers (1; 2) on the brake power motor side, characterized in that an actuating lever (13) which can be rotated by the control linkage (16, 17, 18) is provided on the caliper pull bar (3), which actuating lever is connected to an adjuster input shaft (51) running at right angles to the axis (14) of the caliper pull bar (3), which input shaft is coupled to an adjuster output shaft (45) via a first one-way rotary coupling (56', 60'), and that the adjuster output shaft (45) is supported against a torsion-resistant housing part (47) via a second one-way rotary coupling (56, 60) and is coupled to a rotatable part (39) of the spiral gear (37, 39) identical in axis with the caliper pull bar (3) by means of a bevel gear mechanism (43, 44).

2. Brake linkage according to Claim 1, characterized in that the spiral gear (37, 39) is configured to be self-locking.

3. Brake linkage according to Claim 1 or 2, characterized in that the one-way rotary couplings are configured as commonly, arbitrarily unlockable ratchet gear mechanisms (56, 60; 56', 60') and that the adjuster output shaft (45) is arbitrarily rotatable when the one-way rotary couplings (56, 60; 56', 60') are unlocked.

4. Brake linkage according to one or more of the preceding Claims, characterized in that the adjuster input shaft (51) is configured like a sleeve and is rotatably mounted on the adjuster output shaft (45) rotatably mounted for its part in the housing part (47).

5. Brake linkage according to Claims 3 and 4, characterized in that an arbitrarily rotatable camshaft (62) is rotatably mounted in the adjuster output shaft (45) and on the same axis, which camshaft can be coupled to the adjuster output shaft (45) via a rotary stop (68) which has play and the cams (61; 61') of which are capable of moving the catches (56; 56') of the ratchet gear mechanisms (56, 60; 56', 60') in a rotary movement corresponding to the play of the rotary stop (68) with respect to the adjuster output shaft (45) from their spring (65, 65')-loaded catching position to the lifting position and/or vice-versa.

6. Brake linkage according to Claim 5, characterized by a torsion spring (67) loading the camshaft (62) in the direction of rotation towards the catching position of the catches (56; 56') lying in the rotational direction of adjustment.

7. Brake linkage according to Claim 6, characterized in that the camshaft (62) is mounted in a blind hole (63) of the adjuster output shaft (45), that the rotary spring (67) is clamped between the camshaft (62) and the adjuster output shaft (45), that the camshaft (62) has a cylindrical section (71) projecting out of the adjuster output shaft (45) and an end section adjoining the cylindrical section and having key surfaces (72) for the placing of a rotary tool, that a sealing ring (74) is arranged between an internal-cylindrical section (73) of the adjuster input shaft (51) projecting over the adjuster output shaft (45) and the cylindrical section (71) of the camshaft (62), and that a friction element which may be configured as an annular spring (75) and which brings about a frictional constraint of the adjuster input shaft (51) with respect to the torsion-resistant housing part (47) is clamped between the adjuster input and output shafts (51 and 45).

8. Brake linkage according to one of Claims 5, 6 or 7, characterized in that the ratchet gear mechanisms (56, 60; 56', 60') have an internal geared ratchet (toothing 60; 60') located on the torsion-resistant housing part (47) and/or on the adjuster input shaft (51) with, in each case, an internal catch (56; 56') rotatably mounted on an eccentric bolt (55) of the adjuster output shaft (45), the catch (56; 56') having two legs (57, 58 and 57', 58') running at an angle to each other, the one leg (57; 57') of which has a toothing (59; 59') cooperating with the ratchet on the outside and the other leg (58; 58') of which overlaps a cam (61; 61') of the camshaft (62).

9. Brake linkage according to Claim 8, characterized in that the leg (57; 57') carrying the toothing (59; 59') is loaded in the catching direction by a pressure bolt (64; 64') loaded by the spring (65; 65') and movable in the adjuster output shaft (45).

10. Brake linkage according to one or more of the preceding Claims, characterized in that the adjuster input shaft (51) has a rotary stop (32, 33) with respect to the torsion-resistant housing part (47), which stop is closed only in the release position of the brake linkage.

11. Brake linkage according to Claim 10, characterized in that the control linkage (16, 17, 18) has a lever (18) running approximately parallel to the caliper pull bar (3), which lever is linked on the one hand at the actuating lever (13) and on the other hand at the end of the longer lever arm of a two-armed transmission lever (17) mounted on an abutment (10) provided on the brake power motor (6), that the other end of the transmission lever (17) running approximately perpendicular to the power output direction of the brake power motor (6) is linked to a pull bar (16) running approximately parallel to the power output direction, which pull bar on the other hand is linked to an extension (27) of the caliper lever (2) which can be moved by the brake power motor (6) and which can be extended by a play (s) proportional to a desired holding-off stroke and thereafter against the force of a pre-tensioned spring (19) by means of an integrated stop device (20).

## Revendications

1.  Timonerie de frein du type à étrier, notamment pour freins à disque de véhicules sur rails, comportant deux leviers d'étrier (1,2), dont des premières extrémités sont accouplées à des mâchoires de frein (4) et dont les autres extrémités peuvent être écartées au moyen d'un moteur (6) appliquant la force de freinage et qui sont reliées, dans leur partie médiane, par une barre de traction d'étrier (3) dans laquelle est intégré un dispositif de rattrapage du jeu (12), et dans laquelle le dispositif de rattrapage du jeu (12) peut être commandé, au moyen d'une tringlerie de commande (16,17,18), en fonction de la course d'écartement au niveau des extrémités des leviers d'étrier (1;2), situées du côté du moteur produisant la force de freinage, caractérisée par le fait que sur la barre de traction (3) de l'étrier est prévu un levier d'actionnement (13), qui peut être entraîné en rotation par la tringlerie de commande (16,17,18) et qui est relié à un arbre (51) du dispositif de rattrapage du jeu, qui s'étend perpendiculairement à l'axe (14) de la barre de traction (3) de l'étrier et qui est accouplé, par l'intermédiaire d'un premier accouplement rotatif unidirectionnel (56',60'), à un arbre de sortie (45) du dispositif de rattrapage de jeu et que l'arbre de sortie (45) du dispositif de rattrapage de jeu prend appui, par l'intermédiaire d'un second accouplement rotatif unidirectionnel (56,60), contre un élément de boîtier (47), qui est bloquée en rotation, et est accouplé, au moyen d'une transmission à pignons coniques (43,44), à une partie rotative (39) de la transmission à vis (37,39), qui est disposée sur le même axe que la barre de traction (30) de l'étrier.

2.  Timonerie de frein selon la revendication 1, caractérisée par le fait que la transmission à vis (37,39) est agencée de manière à être autobloquante.

3.  Timonerie de frein selon la revendication 1 ou 2, caractérisée par le fait que les accouplements rotatifs unidirectionnels sont réalisés sous la forme de mécanismes à roues à cliquet (56,60; 56',60'), qui peuvent être débloqués en commun à volonté, et qu'on peut faire tourner à volonté l'arbre de sortie (45) du dispositif de rattrapage du jeu lorsque les accouplements rotatifs unidirectionnels (56,60; 56',60') sont débloqués.

4.  Timonerie de frein selon une ou plusieurs des revendications précédentes, caractérisée par le fait que l'arbre d'entrée (50) du dispositif de rattrapage du jeu est réalisé sous la forme d'une douille et est monté, de manière à pouvoir tourner, sur l'arbre de sortie (45) du dispositif de rattrapage du jeu, qui, pour sa part, est monté de manière à pouvoir tourner dans l'élément de boîtier (47).

5.  Timonerie de frein selon les revendications 3 et 4, caractérisée par le fait que dans l'arbre de sortie (45) du dispositif de rattrapage du jeu est monté de manière à pouvoir tourner, et ce autour du même axe que l'arbre de sortie, un arbre à cames (62), qui peut tourner à volonté et qui peut être accouplé, par l'intermédiaire d'une butée de rotation (68), affectée d'un jeu, à l'arbre de sortie (45) du dispositif de rattrapage du jeu et dont les cames (61,61') peuvent déplacer, selon un mouvement de rotation qui correspond au jeu de la butée de rotation (68), par rapport à l'arbre de sortie (45), les cliquets (56;56') des mécanismes à roues à cliquet (56,60; 56',60') depuis leur position d'encliquetage, dans laquelle ils sont chargés par des ressorts (65,65'), à leurs positions écartées et inversement.

6.  Timonerie de frein selon la revendication 5, caractérisée par un ressort de torsion (67), qui charge l'arbre à cames (62) dans le sens de rotation vers la position d'encliquetage des cliquets (56,56'), qui est située dans le sens de rotation du rattrapage du jeu.

7.  Timonerie de frein selon la revendication 6, caractérisée par le fait que l'arbre à cames (62) est monté dans un trou borgne (63) de l'arbre de sortie (45) du dispositif de rattrapage de jeu, que le ressort de torsion (67) est armé entre l'arbre à cames (62) et l'arbre de sortie (45) du dispositif de rattrapage du jeu, que l'arbre à cames (62) possède une partie cylindrique (61), qui émerge de l'arbre de sortie (45) du dispositif de rattrapage du jeu, et une partie d'extrémité, qui se raccorde à la partie précédente et porte des surfaces (72) d'application d'une clé, pour la mise en place d'un outil d'entraînement en rotation, qu'une bague d'étanchéité (74) est disposée entre une partie (73), qui est intérieurement cylindrique et fait saillie au-delà de l'arbre de sortie (45) du dispositif de rattrapage du jeu, de l'arbre d'entrée (51) de ce dispositif et la partie cylindrique (71) de l'arbre à cames (62), et qu'un élément de friction, qui est réalisé éventuellement sous la forme d'un ressort annulaire (75) et qui établit une liaison par frottement entre l'arbre d'entrée (51) du dispositif de rattrapage de jeu et la partie bloquée en rotation (47) du boîtier, est serré entre l'arbre d'entrée et l'arbre de sortie (59 et 46) du dispositif de rattrapage du jeu.

8. Timonerie de frein selon l'une des revendications 5, 6 ou 7, caractérisée par le fait que la transmission à roues à cliquet (56,60; 56',60') comporte une roue à cliquet (denture 60; 60'), qui possède une denture intérieure et est située sur la partie bloquée en rotation (47) du boîtier ou sur l'arbre d'entrée (51) du dispositif de rattrapage du jeu et comporte un cliquet respectivement intérieur (56; 56'), qui est monté de manière à pouvoir tourner sur un axe excentrique (55) de l'arbre de sortie (45) du dispositif de rattrapage de jeu, le cliquet (56; 56') possédant deux branches (57,58 ou 57',58'), faisant un coude entre elles et dont l'une (57; 57') porte, sur son côté extérieur, une denture (59;59') qui coopère avec la roue à cliquet et dont l'autre (58;58') s'engage au-dessus d'une came (61;61') de l'arbre à cames (62).

9. Timonerie de frein selon la revendication 8, caractérisé par le fait que la branche (57;57') portant la denture (59;59') est chargée, dans la direction d'encliquetage, par une tige de poussée (64;64') déplaçable dans l'arbre de sortie (45) du dispositif de rattrapage de jeu et est chargée par un ressort (65;65').

10. Timonerie de frein selon une ou plusieurs des revendications précédentes, caractérisée par le fait que l'arbre d'entrée (51) du dispositif de rattrapage de jeu possède une butée de rotation (32,33), qui est fermée uniquement dans une position de desserrage de la timonerie de frein, par rapport à la partie bloquée en rotation (47) du boîtier.

11. Timonerie de frein selon la revendication 10, caractérisée par le fait que la tringlerie de commande (16,17,18) possède un levier (18) qui s'étend approximativement parallèlement à la barre de traction (3) de l'étrier et qui est articulée, d'une part, sur le levier d'actionnement (13) et, d'autre part, à l'extrémité du bras le plus long d'un levier de transmission à deux bras (17), qui est monté sur une butée (10) prévue sur le moteur (6) appliquant la force de freinage, que l'autre extrémité du levier de transmission (17), qui s'étend approximativement perpendiculairement à la direction d'application de la force produite par le moteur (6), est articulée sur une barre de traction (16), qui s'étend approximativement parallèlement à la direction de délivrance de la force et qui est articulée, d'autre part, sur un prolongement (27) du levier (2) de l'étrier, qui est déplaçable par le moteur (6) produisant la force de freinage et qui, au moyen d'un dispositif intégré de butée (20), peut être prolongé d'un jeu (s) qui est proportionnel à la course de desserrage de consigne et, à la suite de ce jeu, à l'encontre de la force d'un ressort précontraint (19).

Fig. 1

# Fig. 2

# Fig. 3

# Fig. 4

# Fig. 5

EP 0 499 970 B1